# EUROPEAN PATENT APPLICATION

(11) **EP 1 640 638 A2**
(43) Date of publication of application: **29.03.2006**
(21) Application number: 05425665.6
(22) Date of filing: 23.09.2005
(51) Int. Cl.: F16H 25/04

(54) **Mechanical speed variator**

(30) Priority: 23.09.2004 IT PG20040040
(71) Applicant: Marcantonini, Mario, 06084 Bettona PG (IT)
(72) Inventor: Marcantonini, Mario, 06084 Bettona PG (IT)
(74) Representative: Baldi, Claudio

(57) **Abstract**

The present invention refers to a mechanical speed variator, in which the driving shaft (Am) drags the driven shaft (Ai) by means of a series of eccentric masses (M1,M2), with each mass that rotates inside another mass.

## Description

The present invention refers to a mechanical speed variator, in which the driving shaft drags the shaft driven by means of a series of eccentric masses, with each mass that rotates inside another mass.

The variator of the invention is based on the use of at least one minimum functional unit, composed of the driving shaft that rotates on the main axis, which, by means of a cam, drags the first mass with its centre along a circumference in revolution around the main axis.

The first mass transmits a rotating motion to the second mass, which has its centre at a certain distance from the main axis.

The second mass is housed in the driven shaft, coaxial to the driving shaft.

The acceleration and deceleration motion of the two masses produces a useful inhomogeneous force that is transmitted to the driven shaft.

The first mass also makes alternate rotation on its centre that modifies over time the value of the transmitted force, which creates higher balance between masses during action, while maintaining the quantity of transmitted energy unchanged.

A homogeneous force is obtained and transmitted by assembling multiple minimum functional units and complying with a given parameter in the structural technical layout.

For purposes of clarity the description of the variator according to the present invention continues with reference to the enclosed drawing, which is intended for purposes of illustration only and not in a limiting sense, whereby:
- Fig. 1 is a view of the variator of the invention, cross-sectioned with a plane perpendicular to the axis of the driving shaft;
- Fig. 2 is an enlarged cross-section of the driving shaft;

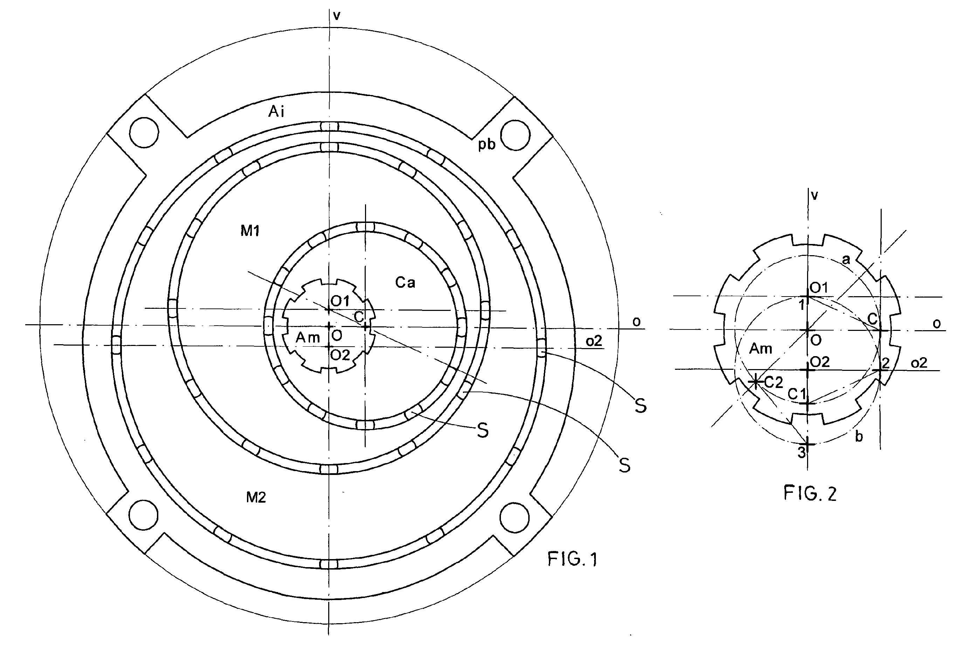

Fig. 1 illustrate the structure of the minimum functional unit, i.e. unit with double mass.

A cam **(Ca)** with centre **(C)** is coupled on the driving shaft **(Am)** that rotates around the main axis **(O),** with the first mass **(M1)** with centre **(O1)** being positioned on the cam **(Ca).**

The first mass **(M1)** is housed inside the second mass **(M2)** with centre **(O2),** which is housed inside the driven shaft **(Ai)** that rotates around the main axis (**O**).

Sliding between the different elements is performed by means of bearings (S).

The driven shaft is provided with bolt-bearing wings **(pb)** in order to tighten the number of functional units of the variator.

The driving shaft starts clockwise rotation and the driven shaft is blocked.

Each rotation of the driving shaft corresponds to motions with periodical acceleration and deceleration phases of the two masses **(M1)** and **(M2).**

The centre **(C)** of the cam **(Ca)** moves along circumference **(a)** with centre **(O);** the centre **(C)** drags the centre **(O1)** of the mass **(M1)** along circumference (b) with centre **(O2),** in revolution motion around the same centre **(O2);** the mass **(M1)** transmits to mass **(M2)** a rotation motion on its centre **(O2).**

Accelerations and decelerations of the two masses are null in point **(1),** which is the transition point from deceleration to acceleration and coincides with centre **(O1)** on the vertical axis **(v);** accelerations are maximum in point **(2),** which coincides with centre **(O1)** on the horizontal axis **(O2);** accelerations and decelerations are null in point **(3)**, which is the transition point from acceleration to deceleration and coincides with centre (**O1**) on the vertical axis **(v).**

Going from point **(3)** to point **(1) -** deceleration phase - the development of motion of the two masses is similar and specular to the acceleration phase.

The masses receive energy when they accelerate and lose it when they decelerate.

The forces applied for acceleration and the forces returned for deceleration are divided in two: one component acts on the masses accelerating or decelerating them, the other component is the useful force that, by means of the arm determined by the distance **(O-02),** produces the motions that act on the driven shaft, rotating it in the same direction as the driving shaft, with transmission of force and consequent transmission of energy.

At the same conditions, the value of the transmitted force depends on the number of revolutions of the driving shaft and on the difference in revolutions between the driving shaft and the driven shaft.

The adaptation of the number of revolutions of the driven shaft, with respect to the resistive force to be overcome, is continuous and automatic.

One functional unit only transmits a pulsing force, according to the dynamics that forms it.

An homogeneous transmitted force is obtained by assembling multiple functional units, in such a way that the resultant of all forces acting on the driven shaft is constant over time.

To that end, in the technical layout, the mechanism structure must comply with a given parameter.

During acceleration the position of the centre **(C)** along circumference **(a)** must comply with the following combination of two conditions:
- the angular distance between the position of centre **(C),** when centre **(O1)** coincides with point **(1)** on the vertical axis (v), and the position of centre **(C)** in **(C1),** when the position of **(O1)** coincides with point **(2)** on the horizontal axis **(O),** is always equal to the angular module **(Ma)** or to a multiple of it.
- the angular distance between the position of centre **(C)** in (**C1**), and the position of centre **(C)** in **(C2),** when (**O1**) coincides with point **(3)** on the vertical axis (v), is always equal to the angular module (**Ma**) or to a multiple of it.

The angular module **(Ma)** is the angle obtained by dividing the entire 360° angle by the number of minimum functional units assembled.

In the embodiment illustrated in figs. 1 and 2, the angular module **(Ma)** is equal to 45°, it being provided that eight functional units are assembled; the first angular distance is equal to two times **(Ma),** while the second angular distance is equal to one time **(Ma);** due to the model chosen for graphic representation, centre **(C)** is positioned on horizontal axis **(O)** and the radius of circumference **(a)** is equal to the radius of circumference **(b).**

In addition to revolution around circumference (**a**), the mass (**M1**) is driven into alternate rotation on its centre (**O1**): in revolution from point **(1)** to point **(3)** it rotates clockwise, and then from point **(3)** to point (**1**) it rotates anticlockwise, with acceleration and deceleration every half revolution.

The force induced by this motion does not affect the value and homogeneity of the total force transmitted, which remains the same, although it modifies the value between the single forces it is formed of.

In specific cases when angular distances, expressed in modules **(Ma),** are different, such in this model, the produced forces are rebalanced, with a decrease of peak values.

A characteristic of the mechanism is represented by the driving shaft that rotates inside the first mass, which rotates inside the second mass, without interference problems between the spaces of the components that reduce and limit constructive possibilities.

Balance of the single masses is guaranteed with a correct distribution of the mass inside the masses.

Balance of the mechanism in general is obtained with suitable radial position of the different functional units with respect to the main axis.

In the case of bearings with rolling friction, such as in the drawing, the rotating bodies contained in the bearings, such as balls or rollers, suffer a complex motion that forms a system of minor forces conforming to the forces generated by the masses to which they are added.

## Claims

1. A mechanical speed variator **characterised in that** it comprises a driving shaft **(Am)** that rotates around the main axis **(O),** on which a cam **(Ca)** with centre **(C)** is coupled, where the first mass **(M1)** with centre **(O1)** is positioned. which is housed inside a second mass **(M2)** with centre **(O2),** which is housed inside the driven shaft **(Ai)** that rotates around the main axis **(O).**

2. A variator as defined in above claim, **characterised in that** bearings (S) are positioned between each couple of mutually rotating components.

3. A variator **characterised in that** it is formed by assembling multiple variators as defined in claim 1, and **characterised in that** in this complex variator, during acceleration, the position of centre **(C)** along circumference **(a)** complies with the following combination of two conditions:
- the angular distance between the position of centre **(C),** when **(O1)** coincides with point **(1)** on the vertical axis (v), and the position of centre **(C)** in **(C1),** when **(O1)** coincides with point **(2)** on the horizontal axis **(o),** is always equal to the angular module **(Ma)** or to a multiple of it.
- the angular distance between the position of centre **(C)** in **(C1),** and the position of centre **(C)** in **(C2),** when **(O1)** coincides with point **(3)** on the vertical axis (v), is always equal to the angular module **(Ma)** or to a multiple of it;
where the angular module **(Ma)** is the angle obtained by dividing the entire 360° angle by the number of variators assembled.

4. A variator as defined in above claim, **characterised in that** the driven shaft **(Ai)** is provided with bolt-bearing wings **(pb)** used to tighten the multiple variators.
